# EUROPÄISCHE PATENTANMELDUNG

(11) **EP 0 616 931 A1**
(43) Veröffentlichungstag der Anmeldung: **28.09.1994**
(21) Anmeldenummer: 94102977.9
(22) Anmeldetag: 28.02.1994
(51) Int. Cl.: B60T 13/68

(54) **Relaisventil-Baugruppe für die belagverschleissabhängige Bremsdrucksteuerung**

(30) Priorität: 24.03.1993 DE 4309467
(71) Anmelder: ROBERT BOSCH GMBH, 70442 Stuttgart (DE)
(72) Erfinder: Goebels, Hermann, Dipl.-Ing., D-71701 Schwieberdingen (DE)

(57) **Zusammenfassung**

In einer Druckluft-Bremsanlage (10) eines Nutzkraftfahrzeugs soll mit einfachen Mitteln der Bremsdruck an der Radbremse (22) vermindert werden, wenn ein Sensor (54) übermäßigen Verschleiß am Bremsbelag (55) feststellt.

In einer zwischen einem Bremsventil (13) und der Steuerkammer (30) eines Relaisventils (19) für die Bremsdrucksteuerung verlaufenden Steuerleitung (28) ist ein Absperrventil (32) angeordnet. Dieses ist von einer druckmindernden Ventileinrichtung (39) und einem Rückschlagventil (37) überbrückt. Bei Vorliegen eines verschleißabhängigen Signals wird bei einer Bremsung das Absperrventil (32) in die Sperrstellung geschaltet, so daß Steuerluft nur über die druckmindernde Ventileinrichtung (39) in die Steuerkammer (30) des Relaisventils (19) gelangen kann. Steuerdruckabbau erfolgt bei sperrendem Absperrventil (32) über das Rückschlagventil (37).

## Beschreibung

### Stand der Technik

Die Erfindung geht aus von einer Relaisventil-Baugruppe nach der Gattung des Hauptanspruchs. Ein derartiges, der pneumatischen Signalverstärkung dienendes Relaisventil ist aus der DE-A-22 54 654 bekannt. Ein Absperrventil in der Steuerleitung des Relaisventils dient dazu, bei einer Blockierschutzregelung im Zusammenwirken mit der Bypassleitung und weiteren Leitungen unterschiedlichen Querschnitts den Bremsdruckgradienten in Druckabbau- und Druckaufbauphasen zu verändern. Bei normalen, ungeregelten Bremsungen ist das Absperrventil offen.

### Vorteile der Erfindung

Die erfindungsgemäße Relaisventil-Baugruppe mit den kennzeichnenden Merkmalen des Hauptanspruchs hat den Vorteil, daß sie mit geringem baulichem Aufwand sowohl eine ungeminderte als auch in Abhängigkeit vom Bremsbelagverschleiß geminderte Druckeinsteuerung in die Steuerkammer gestattet. Darüber hinaus ist auch bei wirksam geschalteter Bremsdruckminderung ein unverzögerter Abbau von Steuerdruck aus der Steuerkammer unter Umgehung von Absperrventil und druckmindernder Ventileinrichtung möglich. Ferner kann sich ein Restdruck in der Steuerkammer bei Wegfall des bremsabhängigen Signals über das offene Absperrventil, die Steuerleitung und das Bremsventil abbauen.

Durch die in den Unteransprüchen aufgeführten Maßnahmen sind vorteilhafte Weiterbildungen und Verbesserungen der im Hauptanspruch angegebenen Relaisventil-Baugruppe möglich.

### Zeichnung

Ein Ausführungsbeispiel der Erfindung ist in der Zeichnung vereinfacht dargestellt und in der nachfolgenden Beschreibung näher erläutert. Es zeigen Figur 1 einen Schaltplan einer Druckluft-Bremsanlage mit einer in Schaltzeichen wiedergegebenen Baugruppe mit einem Relaisventil für die belagverschleißabhängige Bremsdrucksteuerung, Figur 2 eine Bauform eines pneumatisch im Schnitt gezeichneten Relaisventils mit steuerdruckmindernder Ventileinrichtung, Figuren 3 und 4 Diagramme des in unterschiedlicher Weise einer Druckminderung unterworfenen Bremsdruckverlaufs, Figur 5 einen Schaltplan einer Druckluft-Bremsanlage eines zweiachsigen Fahrzeugs mit achsweiser Belagverschleißregelung.

### Beschreibung des Ausführungsbeispiels

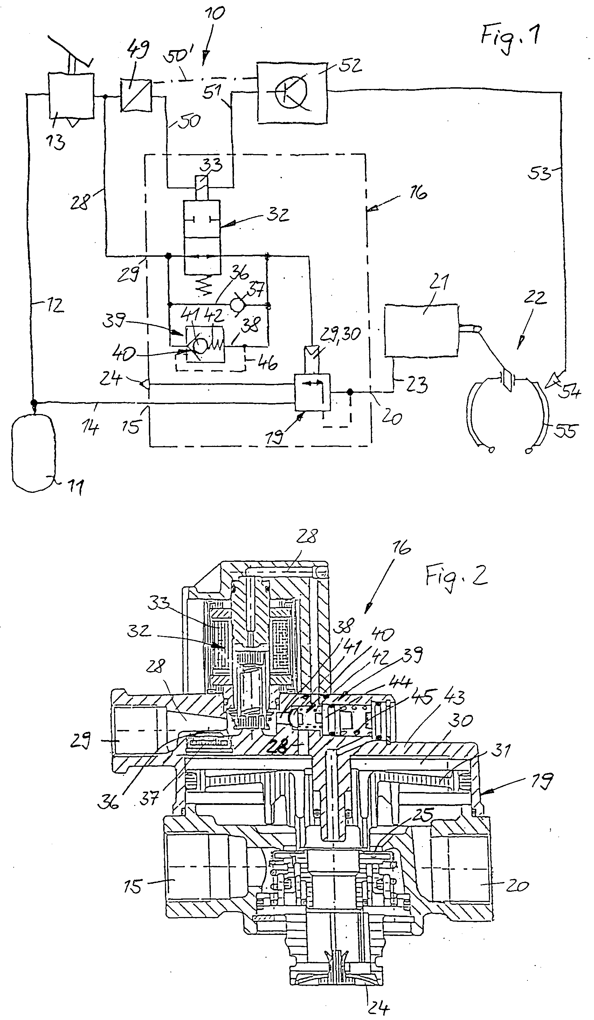

Die in Figur 1 vereinfacht dargestellte Druckluft-Bremsanlage 10 eines Nutzkraftfahrzeugs zeigt lediglich einen Bremskreis, welcher einer nicht gezeichneten Fahrzeugachse zugeordnet ist. Die Bremsanlage 10 besitzt eine Druckluftquelle 11, von der eine erste Versorgungsleitung 12 zu einem Bremsventil 13 ausgeht. Eine zweite Versorgungsleitung 14 endet an einem Anschluß 15 einer Ventilbaugruppe 16. Diese in Figur 1 strichpunktiert umrandete Ventilbaugruppe 16 ist in Figur 2 schematisch wiedergegeben. Für funktionsgleiche Elemente sind in den Figuren 1 und 2 die gleichen Bezugszahlen verwendet.

Die Ventilbaugruppe 16 enthält ein Relaisventil 19, dessen Druckeingang mit der zweiten Versorgungsleitung 14 in Verbindung steht. Ein gesteuerter Druckausgang des Relaisventils 19 weist einen Anschluß 20 für eine zu einem Bremszylinder 21 einer Radbremse 22 führende Arbeitsleitung 23 auf. Weitere an die Arbeitsleitung 23 angeschlossene Bremszylinder des Bremskreises sind nicht dargestellt. Das Relaisventil 19 ist außerdem mit einer Druckentlastungsstelle 24 verbunden. Mittels eines Doppelsitzventils 25 sind Energieströme zwischen der Druckluftquelle 11 und dem Bremszylinder 21 einerseits sowie zwischen letzterem und der Druckentlastungsstelle 24 steuerbar.

Vom Bremsventil 13 geht außerdem eine pneumatische Steuerleitung 28 zu einem Anschluß 29 der Ventilbaugruppe 16 aus. Die Steuerleitung 28 ist zu einer Steuerkammer 30 mit Steuerkolben 31 als Betätigungsmittel für das Relaisventil 19 fortgeführt. Die Ventilbaugruppe 16 weist ein in der Steuerleitung 28 sitzendes Absperrventil 32 in Form eines 2/2-Wegeventils mit federbetätigter Durchlaßstellung auf. Eine Sperrstellung des Absperrventils 32 ist mit einem Elektromagneten 33 als Betätigungsmittel schaltbar. Stromlos ist also das Absperrventil 32 offen.

Das Absperrventil 32 ist von einer ersten Bypassleitung 36 überbrückt. Bei der in Figur 2 dargestellten Ventilbaugruppe 16 befindet sich diese Bypassleitung 36 zwischen dem vom Anschluß 29 ausgehenden Abschnitt der Steuerleitung 28 und der Steuerkammer 30 des Relaisventils 19. In der ersten Bypassleitung 36 ist ein entgegen der Richtung der Druckeinsteuerung vom Bremsventil 13 in die Steuerkammer 30 öffnendes, unbelastetes Rückschlagventil 37 angeordnet. Außerdem ist das Absperrventil 32 von einer zweiten Bypassleitung 38 überbrückt. In dieser ist eine noch zu erläuternde steuerdruckmindernde Ventileinrichtung 39 angeordnet. Bei der Ventilbaugruppe 16 nach Figur 2 verläuft die zweite Bypassleitung 38 zwischen dem anschlußseitigen Abschnitt und dem steuerkammerseitigen Abschnitt der Steuerleitung 28. Die druckmindernde Ventileinrichtung 39 ist als Rückschlagventil 40 mit einem Schließglied 41 ausgebildet, welches unter der Wirkung einer vorgespannten Feder 42 steht und die zweite Bypassleitung 38 geschlossen hält. Die als Schraubendruckfeder gestaltete Feder 42 greift schließgliedabgewandt an einem im Ventilgehäuse 43 druckdicht aufgenommenen Kolbenglied 44 oder Membranglied an. Dieses steht auf seiner anderen Seite unter der Vorspannkraft einer am Ventilgehäuse 43 abgestützten zweiten Druckfeder 45. Auf der Seite der zweiten Druckfeder 45 ist das Kolbenglied druckentlastet. Die Steuerleitung 28 ist zwischen dem Schließglied 41 und dem Kolbenglied 44 hindurchgeführt.

Die druckmindernde Ventileinrichtung 39 kann abweichend von der dargestellten Ausführungsform auch nur aus dem Schließglied 41 und der Feder 42 bestehen, die dann schließgliedabgewandt am Ventilgehäuse 43 abgestützt ist. Bei einer solchen Ausgestaltung entfällt die in Figur 1 gezeichnete Steuerleitung 46 für die Ansteuerung des Rückschlagventiles 40 in Öffnungsrichtung mit dem vom Bremsventil 13 herangeführten Steuerdruck.

An die Steuerleitung 28 ist bremsventilseitig ein Druckschalter 49 angeschlossen. Dieser ist dazu bestimmt, bei einer Bremsbetätigung ein elektrisches Signal über eine Steuerleitung 50 an den Elektromagneten 33 des Absperrventils 32 abzugeben. Der Elektromagnet 33 steht außerdem über eine zweite elektrische Steuerleitung 51 mit einem elektronischen Steuergerät 52 in Verbindung. Dieses erhält über eine elektrische Steuerleitung 53 Signale von einem Sensor 54, mit dem bei jeder Bremsung oder nach einer bestimmten Zahl von Bremsungen der Verschleißzustand des Bremsbelags 55 der Radbremse 22 (oder mittels weiterer Sensoren bei mehreren Radbremsen des Bremskreises) erfaßt und ggf. gespeichert wird.

Das Absperrventil 32 ist in seine Sperrstellung schaltbar, wenn sowohl ein vom Steuergerät 52 bereitgestelltes belagverschleißabhängiges Signal als auch ein Signal vorliegt, welches bei einem Bremsvorgang ausgelöst wird oder einen Bremsvorgang auslöst. Das letztgenannte Signal kann, wie beschrieben, vom Druckschalter 49 oder einem Drucksensor oder einem Bremslichtschalter erzeugt werden.

Abweichend hiervon kann das Signal des Druckschalters 49 über eine Steuerleitung 50' dem Steuergerät 52 zugeführt werden. Dieses sensiert den Belagverschleiß und steuert bei Vorliegen von übermäßigem Belagverschleiß das Absperrventil 32 über die Steuerleitung 51 an. Die Steuerleitung 50 kann dann entfallen.

### Die Druckluft-Bremsanlage 10 hat folgende Wirkungsweise:

Bei einer normalen Bremsung, bei der kein verschleißabhängiges Signal vorliegt, verbleibt das Absperrventil 32 in der gezeichneten Durchlaßstellung, so daß vom Bremsventil 13 durch die Steuerleitung 28 Steuerdruck ungemindert in die Steuerkammer 30 des Relaisventils 19 eingesteuert wird. Das Relaisventil 19 steuert einen Bremsdruck entsprechender Höhe in den Bremszylinder 21 oder in weitere, an die Arbeitsleitung 23 angeschlossene Bremszylinder des Bremskreises ein. Bei Vorliegen von übermäßigem Verschleiß am Bremsbelag 55 erzeugt das Steuergerät 52 ein Signal, welches bei Bremsbetätigung im Zusammenwirken mit dem Signal des Drucksensors 49 das Absperrventil 32 in seine Sperrstellung schaltet. Die vom Bremsventil 13 ausgesteuerte Steuerluft nimmt jetzt nach Überwinden der Vorspannkraft der Feder 42 und Öffnen des Rückschlagventils 40 der druckmindernden Ventileinrichtung 39 ihren Weg durch die zweite Bypassleitung 38 in die Steuerkammer 30 des Relaisventils 19. Dabei erfährt der Steuerdruck eine von der Vorspannkraft der Feder 42 abhängige Minderung, so daß auch der vom Relaisventil 19 ausgesteuerte Bremsdruck im Bremszylinder 21 entsprechend niedriger ist. Diese belagverschleißabhängige Bremsdrucksteuerung kann zur Verschleißminderung an Radbremsen 22 benutzt werden, welche im Vergleich zu Radbremsen in anderen Bremskreisen übermäßigen Belagverschleiß aufweisen.

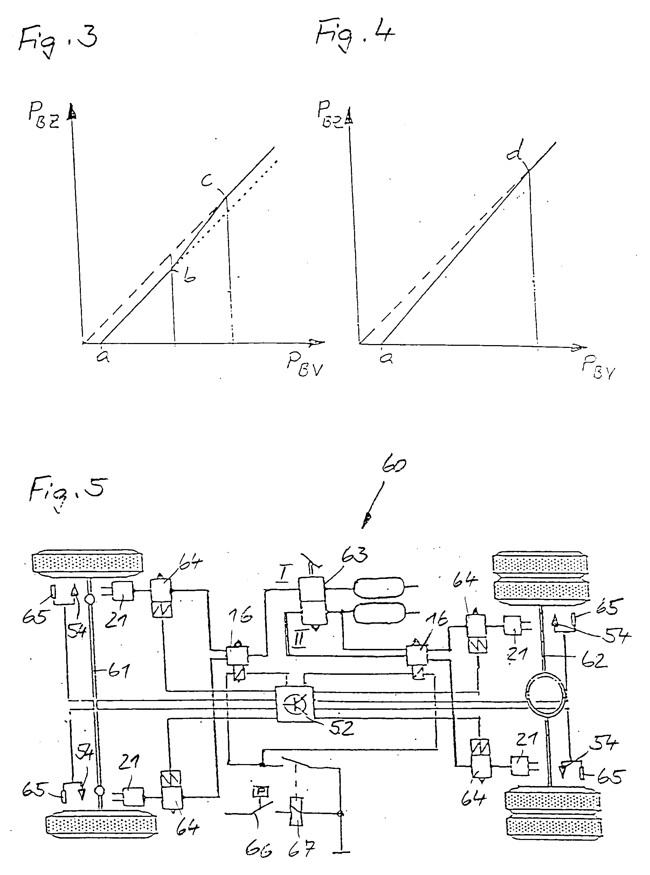

Wie nachfolgend anhand der Figuren 3 und 4 erläutert, kann der Bremsdruck bei übermäßigem Belagverschleiß entweder um ein konstantes Maß oder um ein mit zunehmender Bremsdruckhöhe sich verminderndes Maß zurückgehalten werden. Bei normalem Bremsbetrieb folgt der ausgesteuerte Druck p_{BZ} im Bremszylinder 21 dem eingesteuerten Druck p_{BV} des Bremsventils 13 im Verhältnis 1:1, was in den beiden Diagrammen anhand der gestrichelten, unter 45° verlaufenden Kennlinie aufgezeigt ist. Diese Wirkungsweise der Ventilbaugruppe 16 wird dann genutzt, wenn keine belagverschleißabhängige Bremsdrucksteuerung stattfinden soll.

Soll dagegen eine belagverschleißabhängige Bremsdrucksteuerung aufgrund des Signals des Verschleißsensors 54 erfolgen, so wird das Absperrventil 32 vom Steuergerät 52 angesteuert. Bei einem Bremsvorgang wird das Absperrventil 32 durch das Signal des Drucksensors 49 in die Sperrstellung geschaltet. Besteht die druckmindernde Ventileinrichtung 39 lediglich aus dem Schließglied 41 und der Feder 42 des Rückschlagventils 40, so wird, wie bereits beschrieben, der Bremsdruck um ein festes Maß zurückgehalten. Dies ist in Figur 3 anhand der parallel zur gestrichelten Kennlinie verlaufenden, zunächst ununterbrochen und anschließend gepunktet gezeichneten Linie dargestellt.

Bei einer druckmindernden Ventileinrichtung 39 mit Steuerleitung 46 gemäß Figur 1 bzw. mit Kolbenglied 44 und Druckfeder 45 gemäß Figur 2 ist es dagegen möglich, Kennlinien zu erzeugen, wie sie in den Figuren 3 und 4 mit durchgehend ausgezogenen Linien wiedergegeben sind.

Wenn nämlich die Vorspannkraft der dem Kolbenglied 44 zugeordneten zweiten Druckfeder 45 größer ist als die Vorspannkraft der Feder 42 des Rückschlagventils 40, so wird bei seine Sperrstellung einnehmendem Absperrventil 32 zunächst nur die Anpreßkraft der Feder 42 überwunden und eine gleichbleibende Druckrückhaltung erzielt (Punkt a in Figur 3). Bei demgegenüber gesteigertem Druck p_{BV} vermag die auf das Kolbenglied 44 zusätzlich zur Anpreßkraft der Feder 42 einwirkende Steuerluft die Vorspannkraft der zweiten Druckfeder 45 zu überwinden, so daß das Kolbenglied zurückweicht (Punkt b). Hierdurch wird auch die Anpreßkraft der Feder 42 des Rückschlagventils 40 gemindert und schließlich ganz aufgehoben (Punkt c), so daß der Steuerdruck ungemindert durch die zweite Bypassleitung 38 in die Steuerkammer 30 des Relaisventils 19 eingesteuert wird. Die Neigung der Kennlinie zwischen den Punkten b und c ist durch die Federkonstante der zweiten Druckfeder 45 vorgegeben. Nach dem Punkt c folgt wegen des in seine Offenstellung überführten Rückschlagventils 40 der ausgesteuerte Bremsdruck p_{BZ} dem eingesteuerten Druck p_{BV} im Verhältnis 1:1.

Wird die Vorspannkraft der zweiten Druckfeder 45 jedoch gleich der Vorspannkraft der Feder 42 des Rückschlagventils 40 gewählt, so läßt sich ein Kennlinienverlauf erzielen, wie er im Diagramm gemäß Figur 4 dargestellt ist. Nach Überwinden der Vorspannkraft der Feder 42 öffnet das Rückschlagventil 40 am Punkt a der Kennlinie. An diesem Punkt a wird die maximale Bremsdruckminderung erzielt. Ab Punkt a wird vom Steuerdruck auch die Vorspannkraft der zweiten Druckfeder 45 überwunden und das Kolbenglied 44 zurückgedrängt, so daß eine Minderung der Anpreßkraft der Feder 42 stattfindet. Hierdurch wird eine sich mit steigendem Druck p_{BV} kontinuierlich mindernde Reduzierung der Druckrückhaltung am Rückschlagventil 40 erzielt. Die druckmindernde Wirkung des Rückschlagventils 40 ist am Punkt d der Kennlinie aufgehoben, und diese geht in den 1:1-Verlauf über. Es findet also zwischen den Punkten a und d eine über den Verlauf des eingesteuerten Druckes p_{BV} sich proportional mindernde Reduzierung des ausgesteuerten Bremsdruckes p_{BZ} statt.

Wird bei beiden Ausführungsformen der druckmindernden Ventileinrichtung 39 der Steuerdruck mittels des Bremsventiles 13 verringert, so öffnet das vorzugsweise unbelastete Rückschlagventil 37 in der ersten Bypassleitung 36 aufgrund der sich zwischen der Steuerkammer 30 und dem bremsventilseitigen Abschnitt der Steuerleitung 28 einstellenden Druckdifferenz. Hierdurch vermag sich der Steuerdruck in der Steuerkammer 30 zum Bremsventil 13 hin abzubauen. Wenn das Absperrventil 32 aufgrund des Wegfalls des vom Drucksensor 49 erzeugten Signals in die Durchlaßstellung schaltet, kann sich auch ein Restdruck in der Steuerkammer 30 durch die durchgängige Steuerleitung 28 und das Bremsventil 13 abbauen. In jeder Betriebsweise ist also ein sicheres Bremselösen möglich.

Die in Figur 5 dargestellte Druckluft-Bremsanlage 60 ist auf einem zweiachsigen Nutzkraftfahrzeug angeordnet. Die Bremsanlage 60 weist einen der Vorderachse 61 zugeordneten Bremskreis I und einen der Hinterachse 62 zugeordneten Bremskreis II auf. Beide Bremskreise sind mit einem zweiteiligen Bremsventil 63 ansteuerbar. Sie sind in dieser schematischen Darstellung identisch ausgestattet und weisen an den Radbremsen jeder Achse 61 bzw. 62 zugeordnete und mit einem Steuergerät 52 verbundene Sensoren 54 für die Belagverschleißsensierung auf. Ebenso ist in jedem Bremskreis I bzw. II eine Ventilbaugruppe 16 in der in Figur 1 dargestellten Schaltung angeordnet. Stattdessen kann im Vorderachs-Bremskreis I auch ein Drucksteuerventil für die belagverschleißabhängige Bremsdrucksteuerung Verwendung finden, wie dies in der älteren Patentanmeldung P 42 41 814.3 beschrieben ist. Bei einer Bremsanlage eines Fahrzeugs mit einer übermäßigem Verschleiß ausgesetzten Achse kann es bereits ausreichend sein, die belagverschleißabhängige Bremsdrucksteuerung nur an dieser Achse vorzusehen. Hierdurch ist es möglich, beide Achsen im Verschleißverhalten der Bremsbeläge anzugleichen. Außerdem ist den Bremszylindern 21 jeder Radbremse ein Drucksteuerventil 64 zur Blockierschutzregelung und ggf. Antriebsschlupfregelung zugeordnet. Diese Drucksteuerventile 64 sind in Abhängigkeit vom Raddrehverhalten, welches mittels Sensoren 65 erfaßt wird, vom Steuergerät 52 schaltbar. Für die achsweise belagverschleißabhängige Bremsdrucksteuerung erzeugt das Steuergerät 52 Signale für das dem jeweiligen Relaisventil 19 zugeordnete Absperrventil 32, mit dem die bremsdruckmindernde Ventileinrichtung 39 wirksam gemacht werden kann, wenn ein Bremssignal vorliegt. Dieses Signal wird mittels eines Druckschalters 66 mit einem nachgeschalteten Relais 67 erzeugt.

## Patentansprüche

1. Relaisventil-Baugruppe (16) für die belagverschleißabhängige Bremsdrucksteuerung in einem Bremszylinder (21) einer Druckluft-Bremsanlage (10) eines Nutzkraftfahrzeugs, mit einer von einem Bremsventil (13) zu einer Steuerkammer (30) eines Relaisventils (19) führenden Steuerleitung (28) einem elektromagnetbetätigbaren, stromlos offenen Absperrventil (32) in der Steuerleitung (28) sowie einer das Absperrventil (32) überbrückenden ersten Bypassleitung (36),
gekennzeichnet durch die folgenden Merkmale:
- in einer das Absperrventil (32) überbrückenden zweiten Bypassleitung (38) ist eine steuerdruckmindernde Ventileinrichtung (39) angeordnet,
- das Absperrventil (32) ist bei Vorliegen eines belagverschleißabhängigen Signals von einem einen Bremsvorgang auslösenden oder bei einem Bremsvorgang ausgelösten Signal in die Sperrstellung schaltbar,
- in der ersten Bypassleitung (36) ist ein entgegen der Richtung der Druckeinsteuerung in die Steuerkammer (30) öffnendes Rückschlagventil (37) angeordnet.

2. Relaisventil-Baugruppe nach Anspruch 1, dadurch gekennzeichnet, daß die druckmindernde Ventileinrichtung (39) ein Rückschlagventil (40) mit einem Schließglied (41) ist, das entgegen der Vorspannkraft einer Feder (42) Durchfluß vom Bremsventil (13) zur Steuerkammer (30) gestattet.

3. Relaisventil-Baugruppe nach Anspruch 2, dadurch gekennzeichnet, daß die dem Schließglied (41) zugeordnete Feder (42) als Schraubendruckfeder ausgebildet ist und an einem im Ventilgehäuse (43) druckdicht aufgenommenen Kolbenglied (44) oder Membranglied angreift, das auf seiner einen Seite von der Vorspannkraft der Feder (42) sowie dem Steuerdruck und auf seiner anderen Seite von der Vorspannkraft einer am Ventilgehäuse abgestützten zweiten Druckfeder (45) belastet ist.

4. Relaisventil-Baugruppe nach Anspruch 1, dadurch gekennzeichnet, daß das Rückschlagventil (37) in der ersten Bypassleitung (36) vorzugsweise unbelastet ist.

5. Relaisventil-Baugruppe nach Anspruch 1, dadurch gekennzeichnet, daß das Absperrventil (32) von einem Bremslichtsignal schaltbar ist.
